# EUROPEAN PATENT SPECIFICATION

(11) **EP 3 911 873 B1**
(45) Date of publication and mention of the grant of the patent: **28.12.2022**
(21) Application number: 20701432.5
(22) Date of filing: 17.01.2020
(51) Int. Cl.: F16H 3/00, B60K 6/547, F16H 3/093, F16H 37/04

(54) **DUAL CLUTCH TRANSMISSION ELECTRIC HYBRID ARCHITECTURE FOR AGRICULTURAL VEHICLES**
ELEKTRO-HYBRID-ARCHITEKTUR MIT DOPPELKUPPLUNGSGETRIEBE FÜR LANDWIRTSCHAFTLICHE FAHRZEUGE
ARCHITECTURE HYBRIDE ÉLECTRIQUE DE TRANSMISSION À DOUBLE EMBRAYAGE POUR VÉHICULES AGRICOLES

(30) Priority: 18.01.2019 IT 201900000813
(43) Date of publication of application: 24.11.2021
(73) Proprietor: CNH Industrial Italia S.p.A., 10135 Torino (IT)
(72) Inventor: FORTE, Michelantonio, 41100 Modena (IT); BORGHI, Alberto, 42033 Carpineti (IT); SEDONI, Enrico, 41126 Modena (IT)
(74) Representative: CNH Industrial IP Department
(86) International application number: PCT/EP2020/051198
(87) International publication number: WO 2020/148452

(56) References cited:
- US-A1- 2008 092 681
- US-A1- 2012 203 412
- US-A1- 2015 345 603
- US-A1- 2016 377 155

## Description

### TECHNICAL FIELD

The present invention relates to an electric hybrid architecture of a dual clutch transmission, in particular for an off road vehicle such as an agricultural vehicle and to a related method for controlling the gear shifting of such dual clutch transmission.

### BACKGROUND OF THE INVENTION

Gear transmissions for off road vehicles such as agricultural vehicles offer different configuration, for instance:
- manual shifted transmissions, in which all gears of the transmissions are engaged directly by the driver through lever mechanisms which command clutches, synchronizers and dog clutches to select the gear;
- semi-powershift transmission, in which some gears are engaged, manually or automatically, thanks to servo actuated mechanisms in powershift mode, i.e. by swapping the torque by a couple of clutches, and in which other gears are actuated by lever mechanisms which command clutches, synchronizers and dog clutches to select the gear or by a servo-actuated mechanism which is not in powershift mode, i.e. which uses a single clutch and, when such clutch is opened, torque cannot pass through the transmission; and
- full powershift transmission, in which all gears of the transmission are engaged through servo actuated mechanism in powershift mode.

An important request that must be satisfied in modern mechanical transmission for agricultural vehicles is to have high efficiency across the full ground speed range, in order to improve the vehicle fuel consumption. In this respect a large use of wet clutches to build the semi-powershift or the full-powershift transmissions, generates more power losses inside the transmission when compared to the use of synchronizers and dog-clutches and, as consequence, a penalty of efficiency.

For this reason, in the art, the dual-clutch transmission, DCT, architecture is considered the most valuable layout for powershift transmissions in order to satisfy all the previous demands:
- it provides a high number of speed ratios with a mechanism that allows for a comfortable powershift (by swapping one couple of clutches); and
- it performs high efficiency, because a powershift layout is provided by only few couples of wet clutches accompanied by many synchronizers and dog-clutches.

Because of these advantages, recently DCT architectures have been applied in the field of the transmissions for agricultural vehicles. Indeed DCT architecture may be used for all working speed ranges of an agricultural vehicle i.e. from 0 km/h to highest nowadays limits, e.g. 60 km/h.

Essentially, a DCT architecture in the field of the transmissions for agricultural vehicles comprises two main clutches, namely forward and rearward clutches, that are deputed to select the forward and reverse direction of motion of the tractor and two additional clutches, namely odd and even clutches, configured to select two auxiliary shafts which carries the synchronizer elements. DCT further comprises a plurality of synchronizer elements which may be moved from a neutral position to engage one gear mounted coaxial to the shaft and free to rotate in respect to the shaft itself; a counter wheel of the engaged gear is mounted on the output shaft of the DCT and therefore the engagement of the synchronizer define the speed ratio between an input shaft, namely the engine shaft, and an output shaft, namely the output shaft of the DCT gearbox.

The sequence of the gears is distributed according to the logic of even gears driven by the even clutch and odd gears driven by odd clutch. Therefore, odd and even clutches are swapped alternatively in a gear shift sequence and the selection of the incoming gear ratio is done by the engagement of the appropriate synchronizer element. It is clearly understood that the core part of a DCT architecture is the operation of synchronization as it generates the quality of the shifting.

However, such coupling by means of synchronizers shows limitations due to repeatability of the shifting maneuver, which often requires compensation for environmental conditions, the wearing of the synchronizers or even their failure in case of misuse. Moreover, the cost of the solution, related to the cost of the synchronizers and of the hydraulic requested to drive their shifting is relevant, as the cost of the single installation has to be multiplied by the number of synchronizers.

A solution aimed to remove synchronizers is disclosed in document WO2011027616 A1; in the disclosed architecture while one main shaft of the DCT transfers all the power through the transmission, then the other main shaft of the DCT is driven by an electric motor to the correct speed in order to engage the desired gear: no synchronizers are required, because the gear can be engaged with a dog-clutch since no speed difference exists between shaft and desired gear wheel.

However the aforementioned disclosed transmission is not suited for DCT transmissions for being used in off road/agricultural vehicles. In fact, mechanical transmissions of agricultural vehicles comprise more than one stage of gears with multiple ratios selectable by the user, e.g. first stage called "gears" and a second stage called "ranges", because agricultural vehicles are required to work in a wide range of ground speeds. As a consequence
- when the lowest "gear" is engaged in the DCT gearbox and a "range" down-shifting is required in order to reduce the ground vehicle speed, then the DCT gearbox must be reset from the lowest "gear" to the highest "gear", as that one is the closest available ratio;
- in the opposite direction, when the highest "gear" is engaged in the DCT gearbox, and a "range" up-shifting is required in order to increase the ground vehicle speed, then the DCT gearbox must be reset from the highest "gear" to the lowest "gear", as that one is the closest available ratio.

Therefore, in case the electrical synchronization as disclosed in (WO2011027616 A1) was applied to such kind of agriculture vehicle transmission in order to gain the advantages reported in that layout, then the following drawbacks would occur:
- the mechanical power required from the odd electric motor and from the even electric motor (of the DCT gearbox) during the aforementioned DCT gearbox synchronization reset is much greater than during the other shifts, because of the bigger speed difference to overcome;
- the mechanical power required from the electric motor that should provide synchronization of the range shaft in non-powershift mode is very high, because of the big speed difference to overcome due to the large difference in the split of the consecutive ratios of the range.

Document US2008/092681A discloses a powershift transmission comprising a single slippable clutch and a bypass shaft.

In conclusion, the need is felt to improve existing DCT architecture for agricultural vehicle in order to improve their performances in all its working speed ranges and to improve the comfort during all gears shifting.

Aim of the present invention is to satisfy the above mentioned needs in a cost-effective and optimized way.

### SUMMARY OF THE INVENTION

The aforementioned aim is reached by an electric hybrid architecture for a dual clutch transmission and a related control method as claimed in the appended set of claims.

### BRIEF DESCRIPTION OF THE DRAWINGS

For a better understanding of the present invention, a preferred embodiment is described in the following, by way of a non-limiting example, with reference to the attached drawings wherein the only figure is a schematic representation of a dual clutch transmission architecture according to the present invention

### DETAILED DESCRIPTION OF THE INVENTION

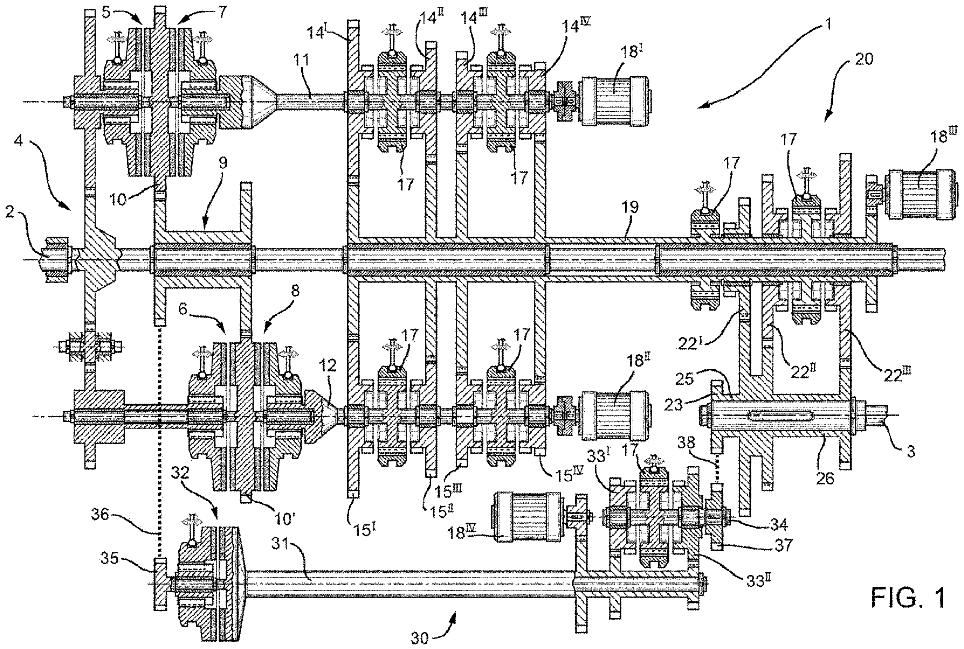

Figure 1 discloses a dual clutch transmission 1 for an off road vehicle, such as a tractor (not illustrated), comprising an engine input shaft 2, operatively connected to an engine (not illustrated) of the work vehicle, and an output shaft 3, which can be coupled to the drive system of the off road vehicle.

Transmission 1 moreover comprises a first main clutch 5, hereinafter "forward clutch", and a second main clutch 6, hereinafter "rearward clutch", both coupled to the engine input shaft 2 via an input stage 4.

In a known configuration the forward clutch 5 couples the engine input shaft 2 to the output shaft 3 in order to allow a forward motion of the work vehicle while the rearward clutch 6 couples the engine input shaft 2 to the output shaft 3 in order to allow a rearward motion of the work vehicle.

Transmission 1 further comprise a first clutch 7, hereinafter "even clutch", and a second clutch 8, hereinafter "odd clutch". The even clutch 7 is configured to couple a first auxiliary shaft 11, hereinafter "even shaft", with the forward clutch 5. The odd clutch 8 is configured to couple a first auxiliary shaft 12, hereinafter "odd shaft", with the rearward clutch 6.

Advantageously, the forward clutch 5 is coupled to the even clutch 7 by a first housing 10' and the rearward clutch 6 is coupled to the odd clutch 8 by a second housing 10". The first and the second housing 10', 10" are coupled together by an intermediate gear 9 carried in a rotatable free manner by engine input shaft 2.

Preferably the intermediate gear 9 is configured to be coupled to the first housing 10' through a first gear ratio and to be coupled to the second housing 10" through a second gear ratio. The first and the second gear ratio are preferably different.

In view of above, thanks to the coupling of the housings 10', 10" with the intermediate gear 9, the even shaft 11 may be coupled to the rearward clutch 6 and the odd shaft 12 may be coupled to the forward clutch 5.

The even shaft 11 and the odd shaft 12 each comprises a plurality of selection elements e.g. dog clutches 17, fixedly carried by the respective shaft 11, 12 and therefore they rotate together with the respective shaft 11, 12. Alternatively selection elements may comprise other equivalent connection means such as joint clutches.

Preferably the even or the odd shaft accommodates a plurality of gears having different sizes one with respect to the other and that are supported in a rotatable free manner the respective shaft 11, 12, e.g. by means of bearings, so that they are not forced to rotate to the same speed of the respective shaft 11, 12 when the engaging dog clutch 17 is in their neutral position.

Preferably the even shaft 11 may comprise four gears 14, namely a first gear 14^{I} having the biggest diameter, a fourth gear 14^{IV} having the smallest diameter and a second and third gears 14^{II}, 14^{III} having respective diameters comprised between the ones of the first and the fourth gears.

Similarly, the odd shaft 12 may comprise four gears 15, namely a first gear 15^{I} having the biggest diameter, a fourth gear 15^{IV} having the smallest diameter and a second and a third gears 15^{II}, 15^{III} having respective diameters comprised between the ones of the first and the fourth gears.

Advantageously the gear 14^{I} has the same diameter of gear 15^{I}, gear 14^{II} has the same diameter of gear 15^{II}, gear 14^{III} has the same diameter of gear 15^{III} and gear 14^{IV} has the same diameter of gear 15^{IV}.

The gears of gears sets 14, 15, when selected, represent the different speed ratios of the transmission ; namely first speed ratio selecting gear 15^{IV}, second speed ratio selecting gear 14^{IV}, third speed ratio selecting gear 15^{III}, fourth speed ratio selecting gear 14^{III}, fifth speed ratio selecting gear 15^{II}, sixth speed ratio selecting gear 14^{II}, seventh speed ratio selecting gear 15^{I} or eighth speed ratio selecting gear 14^{I}

As said above, gears of the gears sets 14, 15 may be selected by a dog clutch 17 configured to couple the shaft with the chosen gear. Preferably the even shaft 11 may comprise two dog clutches 17 interposed respectively between the gear 14^{I} - 14^{II} and 14^{III} -14^{IV}. Similarly the odd shaft 12 may comprise two dog clutches 17 interposed respectively between the gear 15^{I} - 15^{II} and 15^{III} -15^{IV}.

According to an aspect of the invention, dual clutch transmission 1 further comprises a first and a second electric motor 18^{I}, 18^{II} each respectively connected to odd and even shafts 11, 12. Preferably electrical motors 18^{I}, 18^{II} are directly coupled to even and odd shafts 11, 12 in a terminal portion of these latter, opposite to clutches 7 and 8. Such coupling may be realized in known way, depending on the design space constraint and on the electric motor architecture.

The counter wheel of each engaged gears of the gear sets 14, 15 are rigidly mounted on an intermediate shaft 19, that is coaxial with the engine shaft 2 and that may be directly connected to the output shaft 3 or, according to the described configuration, through an additional gear reduction stage, namely a gear range group stage 20, with a gear ratio selection mechanism.

The gear range group 20 is configured to couple the intermediate output shaft 19 to the output shaft 3 by choosing in between a plurality of gear ratios which are multiplied by the above described DCT gear ratios.

For example, the range selecting stage 20 may comprise first gear 22^{I} called "low" range, a second gear 22^{II} "medium" range, and a third gear 22^{III} called " fast" ; the three range gears have different dimensions and are configured to mate with the corresponding gears mounted on the output shaft 3 as described in the following. In this way, the transmission provides twenty four possible gear ratios, due to the eight DCT ratios repeated over the three range ratios.

Advantageously, first gear 22^{I}, second and third gears 22^{II} and 22^{III} are carried in rotatable free manner on intermediate geared shaft 19 while corresponding gears on output shaft 3 are rigidly carried on this latter. Similarly to ratio stage, dog clutches 17 may move on their left and right sides to engage the appropriate gear that identifies the requested speed range. According to the described configuration, the gear range group 20 comprises two dog clutches 17, a first dog clutch 17 voted to couple first gear 22^{I} to intermediate geared shaft 19 and a second dog clutch 17 between third gear 22^{II} and fourth gear 22^{III} voted to selectively couple these latter to intermediate geared shaft 19.

According to a further aspect of the present invention, gear range group 20 comprises an electric motor 18^{III} coupled to intermediate shaft 19, preferably placed to an extremity of shaft 19 opposite with respect to the one nearer to input shaft 2.

According to a further aspect of the present invention, dual clutch transmission 1 further comprises a jump stage 30 mechanically interposed between intermediate gear 9 and range stage 20.

In particular, jump stage 30 comprises a main jump shaft 31 rigidly carrying a connection clutch 32 configured to mechanically connect or disconnect main jump shaft 31 to intermediate gear 9. Jump stage 30 further comprises an intermediate jump shaft 34 carrying a first gear 33^{I} and a second gear 33^{II} configured to cooperate with corresponding gears carried by main shaft 31 to define a first jump ratio and a second jump ratio. Preferably, first gear 33^{I} defines a lower gear ratio with respect to the second gear 33^{II}.

According to the described configuration, first gear 33^{I} and second gear 33^{II} are carried in rotatable free manner on intermediate jump shaft 34 while corresponding gears on main jump shaft 31 are rigidly carried on this latter. Similarly to ratio and range stages, gears first gear 33^{I} and second gear 33^{II} may be selectively rotatably coupled to intermediate jump shaft 34 via a dog clutch 17.

As said, jump stage 30 is further connected to intermediate gear 9 and to range stage 20 via a mechanical link. According to the described configuration, clutch 32 is fixedly connected to a gear 35 configured to define a mechanical linkage 36 with intermediate gear 9 ; further, intermediate jump shaft 34 comprises a gear 37 fixedly carried on a terminal portion of this latter adjacent to second jump gear 33^{II} defining a mechanical linkage 38 with a gear 23 fixedly carried by output shaft 3 in a terminal portion of this latter adjacent to first stage gear 22^{I}.

According to a further aspect of the present invention, jump stage 30 further comprises a fourth electric motor 18^{IV} coupled to main jump shaft 31.

Electric motors 18^{I}, 18^{II}, 18^{III}, 18^{IV} are preferably relatively small electric motors, preferably having voltage lower than 48 V and/or limited power output e.g. lower than 6-7 kW.

Electric motors 18^{I}, 18^{II}, 18^{III}, 18^{IV} are electrically fed by a source of electrical energy for example carried by the vehicle, such as an alternator and/or a battery pack and/or a super capacitator configured to supply energy during possible load peaks. Advantageously, the alternator may receive mechanical power to generate electrical energy from input shaft 2 of the transmission.

As known, electric motors 18^{I}, 18^{II}, 18^{III}, 18^{IV} are selectively operating on the respective shaft 11, 12, 19, 34 and may be connected thanks to any typology of joint.

The above described clutches 5, 6, 7, 8, 32 and the dog clutches 17 can be selected by respective actuators (not shown) that are controlled by an electronic control unit (not shown). Also electric motors 18^{I}, 18^{II}, 18^{III}, 18^{IV} are controlled by such electronic control unit which may control the velocity and torque that these motors can transmit to the respective coupled element. The electronic control unit controls said clutches or said electronic motors by sending control electric signals directed to the respective clutches or motors to be controlled.

Electronic control unit can be either the ECU of the vehicle or driveline ECU of the vehicle. The electronic unit is configured to control the above cited elements of the transmission 1 as per direct input command of the user of the vehicle or in automatic way following the shift control logic deployed into a specific software code, which can be memorized into the electronic unit.

Examples of typical operations of the transmission 1 are described in the following.

A first example of operation is the take-off of transmission 1 from a park condition of the vehicle in which the park brake is engaged and the engine is off.

The user switches on the engine and shifts the shuttle lever from park to unbrake position; in this condition clutches 5, 6, 7, 8, 32 are still open and the engine shaft 2 starts to rotate, consequently all the elements which are directly coupled to the engine shaft 2 (e.g. the input stage 4) are rotating. The user (or the ECU) selects a total gear ratio between the available ratios, for example the II total gear ratio that is SECOND SLOW corresponding to gears 14^{IV} and 22^{I} engaged. Therefore gear 14^{IV} of even shaft 11 is selected by moving the dog clutch 17 and gear 22^{I} is selected by moving the dog clutch 17 of the group 20, then even clutch 7 is engaged. The control of the previously mentioned clutches is made, as known, thanks to ECU control. In this way there is a continuous mechanical path from the housings 10' and 10" to the output shaft 3. For example, the user by moving a lever in the vehicle, allows the forward clutch 5 to be engaged and the housings 10' and 10" start to rotate and thanks to even clutch 7, the even shaft 11 is forced to rotate as well as the intermediate geared shaft 19 and the output shaft 3 thanks to the mechanical connection which is established form engine shaft 2 to output shaft 3. It has to be noted that in this configuration, as none of the gears 15 is engaged on odd shaft 12 and none of the gears 33 is engaged on intermediate jump shaft 34, both of these latter are free.

A second example of operation is the shift of gear of gear ratio stage, e.g. as described below.

Since the vehicle is moving forward the mechanical path between the engine shaft 2 and the output shaft 3 is the same as described in the previous example. Therefore, forward clutch 5 is engaged, even clutch 7 is engaged, in order to connect even shaft 11 to the engine input shaft 2 and gears, e.g., 14^{IV} and 22^{I} are selected to connect the even shaft 11 to the output shaft 3 via the intermediate geared shaft 19. In such condition, the user may decide to downshift (or upshift) by selecting the desired ratio, e.g. by selecting a button on a handle. The vehicle may moreover be provided by a dedicated control software code, running on the ECU of the vehicle, configured to recognize signals from sensors installed on the vehicle, e.g. the torque demand at the output shaft 3 and the speed of the engine input shaft 2, and automatically change the transmission ratio to a better suited ratio automatically without any user intervention.

Supposing that the user or the ECU decided to downshift from second gear ratio - slow range to first gear ratio - slow range, e.g. passing from gear 14^{IV} to gear 15^{IV} maintaining always engaged range gear 22^{I}, then gear 15 will be disengaged by moving the relative dog clutch 17 and the electric motor 18^{II} will make the odd shaft 12 rotate to a target speed, i.e. the speed required to move the dog clutch 17 towards the gear 15^{IV} and engage it with nearly no speed difference between the dog clutch 17 and the gear 15^{IV}. The electronic control unit ensures the management of the dog clutch 17 engagement within a certain maximum tolerance in the difference of speed between the shaft 12 and the gear 15^{IV}. The power size of the electric motors 18^{I}, 18^{II} ensures the completion of these tasks within a maximum time lapse available for speed synchronization, defined by design compatibly with the inertia of the shafts and the maximum difference of speed to be overcome. Once dog clutch 17 has engaged the gear 15^{IV} the clutches 7 and 8 are swapped, allowing the torque flow across the new gear ratio. As no torque passes through even shaft 11 and gear 14^{IV}, then the ECU may decide to disengage the gear 14^{IV} from even shaft 11 by moving the dog clutch 17 away from the gear 14^{IV}, so that shaft 11 is free namely, it is not involved in torque transmission from engine shaft 2 to output shaft 3.

A third example of operation is the management of the speed of the free shaft of the gear ratio stage, i.e. the shaft that is not involved in torque transmission as described above, e.g. as described below.

Since the vehicle is moving forward, the mechanical path between the engine shaft 2 and the output shaft 3 is the same as described in the first example. Therefore, forward clutch 5 is engaged, even clutch 7 is engaged, in order to connect even shaft 11 to the engine input shaft 2 and gears 14^{IV} and 22^{I} are selected to connect the even shaft 11 to the output shaft 3 via the intermediate geared shaft 19.

The vehicle may be provided by a dedicated control software code in the ECU of the transmission configured to recognize signals from sensors installed on the vehicle, e.g. the torque demand at the output shaft 3 and the speed of the engine input shaft 2, and automatically define a target speed for the free shaft of the gear ratio stage, i.e. the shaft that is not involved in torque transmission, without any user intervention. Basing on the signals received from the sensors installed on the vehicle, the ECU may decide to predispose the free shafts in order to facilitate a shift of the transmission ratio.

In this example the odd shaft 12 is free, in the sense that it is not involved in torque transmission from engine shaft 2 to output shaft 3. In this case, after the engagement of the even clutch 7 as final step of an operation which leads to the engagement of II Total Gear Ratio, i.e. SECOND SLOW, involving gears 14^{IV} and 22^{I}, then the ECU may decide to disengage from the odd shaft 12 any gear 15 eventually engaged on the same, by moving the dog clutch 17 away from that gear 15. In this condition, the odd shaft 12 is free and may be made rotate by the electric motor 18^{II} to a new target speed defined by the ECU.

In particular, the control software code provided in the ECU may be designed in order to define as target speed for the free shaft an intermediate speed between:
- the speed required to move the dog-clutch 17 towards the gear 15^{IV} with nearly no speed difference between the dog-clutch 17 and the gear 15^{IV};
- the speed required to move the dog-clutch 17 towards the gear 15^{III} with nearly no speed difference between the dog-clutch 17 and the gear 15^{III}.

The ECU of the transmission will control the electric motor 18^{II} in order to make the odd shaft 12 rotate to such intermediate target speed. The power that should be provided to the electric motor 18^{II} in order to keep the odd shaft 12 rotating to such intermediate target speed is low because it's simply due to the rotation of the shaft on its bearings.

Supposing that the user/ECU decide to downshift from second gear ratio - slow range to first gear ratio - slow range (or upshift from second gear ratio - slow range to third gear ratio - slow range), then transmission will work as describe in second example of operation, in order to engage gear 15^{IV} (or respectively gear 15^{III}) and to swap the even clutch 7 and the odd clutch 8.

One of the possible advantages of managing the speed of the free shaft as described in this example of operation is that the difference of speed to be overcome by the electric motor 18 which drives the free shaft, in the described example the electric motor 18^{II} which drives the odd shaft 12, when a shifting of the gear ratio is required by the user/ECU, is very low and independent of which shifting is required (upshifting or downshifting). As a consequence, compatibly with the inertia of the shafts and the maximum time lapse available for speed synchronization (defined by design), the power request from the electric motors 18^{I}, 18^{II} is less than their maximum power size due to the low difference of speed to be overcome, determining lower stress and wear on the them.

For example, without the described control strategy, after the disengagement from the odd shaft 12 of any gear 15 eventually engaged on the same, then the speed of the odd shaft 12 may decrease until the shaft stops; in this case the difference of speed to be overcome in order to engage the new gear 15 on the odd shaft 12 when a shifting is required would be greater.

A fourth example of operation is the shift of both a gear of the gear ratios stage and a gear of the range ratios stage, as described below.

Supposing that the user or the ECU decides to upshift from eight gear ratio - medium range to second jump ratio, and then from second jump ratio to first gear ratio - fast range, e.g. passing from gears 14^{I} and 22^{II} to gear 33^{II}, and then from gear 33^{II} to gears 15^{IV} and 22^{III}, transmission 1 will activate jump stage 30 as described in the following.

During the upshifting sequence of the gears in the gear ratio stage, from 14^{I} to 15^{IV} while the range gear 22^{II} is maintained always engaged, when, e.g., gear 14^{II} is engaged the electric motor 18^{V} will make the main jump shaft 31, and accordingly gears 33^{I} and 33^{II} , rotate to reach a target speed, i.e. the speed required to move the dog clutch 17 towards the gear 33^{II} and engage it with nearly no speed difference between the dog clutch 17 and the gear 33^{II}. The electronic control unit ensures the management of the dog clutch 17 engagement within a certain maximum tolerance in the difference of speed between the shaft 34 and the gear 33^{II}. The time available to make rotate the shaft 31 and the gears 33^{I} and 33^{II}, in order to make gear 33^{II} to reach the target speed, is enough high , e.g. at least 1 second, compared to the inertia and the difference of speed, so that the power of the electric motor 18^{IV} can be small, e.g. at most 5 kW.

When the above condition is reached, then the main jump shaft 31 is rotationally connected to output shaft 3 through gears 33^{II} and 38, so when the user or ECU decides to pass from eight gear ratio - medium range to second jump ratio, then even clutch 7 will be disengaged and jump clutch 32 will be engaged. Thanks to such clutch swapping the torque will then now pass from input stage via forward clutch 5, to intermediate gear 9, then via jump clutch 32 to main jump shaft and then via second jump ratio to output shaft 3 via gear 37.

In such situation both the gear ratio and the range ratio stages are free and no torque passes through themselves; it is therefore possible to switch all necessary gears to pass to the upshift configuration, i.e. first gear ratio - fast range.

Before even clutch 7 is disengaged and jump clutch 32 is engaged, i.e. the transmission is still at eight gear ratio - medium range, the ECU controls the dog clutch 17 in order to disengage gear 15^{I} from the odd shaft 12 and then controls the motor 18^{II} to start to make odd shaft 12 rotate so as to reach a predefined target speed, i.e. the speed required to move the dog clutch 17 towards the gear 15^{IV} on shaft 12 and engage this latter with no speed difference, while the gear 22^{III} will already be engaged on intermediate jump shaft 19. When the user, or the ECU, decides to pass from eight gear ratio - medium range to first jump ratio, then even clutch 7 and jump clutch 32 are swapped, i.e. the jump stage 30 supports transmission load, then clutches 17 disengage respectively gear 14^{I} from even shaft 11 and gear 22^{II} from intermediate geared shaft 19. In this way all the gear and range stage shafts are free and the odd shaft is still being made rotate by electric motor 18^{II} in order to reach the predefined target speed. Then, third electric motor 18^{III} will make the intermediate geared shaft 19 rotate to reach a target speed, i.e. the speed required to move the dog clutch 17 towards the gear 22^{III} on shaft 19 and engage this latter with no speed difference. The electronic control unit ensures the management of the dog clutch 17 engagement within a certain maximum tolerance in the difference of speed between the shaft 19 and the gear 22^{III}.

When the above conditions are met, both ratio gear 15^{IV} and range gear 22^{III} are engaged with the respective shafts 12, 19 and intermediate geared shaft 19 is rotationally connected to output shaft 3 through gear 22^{III}. When the user, or the ECU, decides to pass from the second jump ratio to first gear ratio - fast range, then even jump clutch 32 will be disengaged and odd clutch 8 will be engaged. Thanks to such clutch swapping the torque will then now pass from input stage via forward clutch 5, to intermediate gear 9, then via odd clutch 8 to odd shaft 12, then via gear 15^{IV} to intermediate geared shaft 19 and via gear 22^{III} to output shaft 3. Jump stage 30, being no more connected to both stages is then not transmitting torque.

A fifth example of operation is another method (alternative to the one described in the fourth example) in order to provide the shift of both a gear of the gear ratio stage and a gear of the range ratio stage, as described below.

Supposing that the user decided to upshift from eight gear ratio - medium range to second jump ratio, and then from second jump ratio to first gear ratio - fast range, e.g. passing from gears 14^{I} and 22^{II} to gear 33^{II}, and then from gear 33^{II} to gears 15^{IV} and 22^{III}, transmission 1 will activate jump stage 30 as described in the following.

During the upshifting sequence of the gears in the gear ratio stage, from 14^{I} to 15^{IV} while the range gear 22^{II} is maintained always engaged, when e.g. gear 14^{II} is engaged then the electric motor 18^{IV} will make the main jump shaft 31 and accordingly gears 33^{I} and 33^{II} rotate to reach a target speed, i.e. the speed required to move the dog clutch 17 towards the gear 33^{II} and engage it with nearly no speed difference between the dog clutch 17 and the gear 33^{II}. The electronic control unit ensures the management of the dog clutch 17 engagement within a certain maximum tolerance in the difference of speed between the shaft 34 and the gear 33^{II}.

The time available to make rotate the shaft 31 and the gears 33^{I} and 33^{II}, in order to make gear 33^{II} to reach the target speed, is enough high, e.g. at least 1 second, compared to the inertia and the difference of speed, so that the power of the electric motor 18^{IV} can be small, e.g. at most 5 kW.

When the above condition is reached, then the main jump shaft 31 is rotationally connected to output shaft 3 through gears 33^{II} and 38, so when the user or ECU decides to pass from eight gear ratio - medium range to second jump ratio, then even clutch 7 will be disengaged and jump clutch 32 will be engaged. Thanks to such clutch swapping the torque will then now pass from input stage via forward clutch 5, to intermediate gear 9, then via jump clutch 32 to main jump shaft and then via second jump ratio to output shaft 3 via gear 37.

In such situation both the gear ratio and the range ratio stages are free and no torque passes through themselves; it is therefore possible to switch all necessary gears to pass to the upshift configuration, i.e. first gear ratio - fast range.

Before even clutch 7 is disengaged and jump clutch 32 is engaged, i.e. transmission is still at eight gear ratio - medium range, the ECU controls the dog clutch 17 in order to disengage gear 15^{I} from the odd shaft 12 and then controls the motor 18^{II} to make odd shaft 12 rotate so as to reach a predefined target speed, i.e. the speed required to move the dog clutch 17 towards the gear 15^{IV} on shaft 12 and engage this latter with no speed difference, while the gear 22^{II} is still engaged on the intermediate geared shaft 19.

When the user, or the ECU, decides to pass from eight gear ratio - medium range to first jump ratio, then even clutch 7 and jump clutch 32 are swapped, i.e. jump stage 30 supports transmission load, then clutches 17 disengage respectively gear 14^{I} from even shaft 11 and gear 22^{II} from intermediate geared shaft 19. In this way all the gear and range stage shaft are free and the odd shaft is still being made rotate by electric motor 18^{II} in order to reach the predefined target speed.

When the electric motor 18^{II} reaches the predefined target speed, then gear 15^{IV} is engaged on odd shaft 12 by dog clutch 17 and odd clutch 8 is engaged for a short time and then disengaged again. By engaging the odd clutch 8 for a short time after the engagement of gear 15^{IV} on odd shaft 12, the speed of the intermediate geared shaft 19 is got closed to its target speed, i.e. the speed required to move the dog clutch 17 towards the gear 22^{III} on shaft 19 and engage this latter with no speed difference.

Then electric motor 18^{III}, directly, and electric motor 18^{I}, through odd shaft 12 and gear 15^{IV} engaged on the same will make the intermediate geared shaft 19, rotate to reach a target speed, i.e. the speed required to move the dog clutch 17 towards the gear 22^{III} on shaft 19 and engage this latter with no speed difference. The electronic control unit ensures the management of the dog clutch 17 engagement within a certain maximum tolerance in the difference of speed between the shaft 19 and the gear 22^{III}.

When the above conditions are met, both ratio gear 15^{IV} and range gear 22^{III} are engaged with the respective shafts 12, 19 and intermediate geared shaft 19 is rotationally connected to output shaft 3 through gear 22^{III}.

When the user or ECU decides to pass from second jump ratio to first gear ratio - fast range, then even jump clutch 32 will be disengaged and odd clutch 8 will be engaged. Thanks to such clutch swapping the torque will then now pass from input stage via forward clutch 5, to intermediate gear 9, then via odd clutch 8 to odd shaft 12, then via gear 15^{IV} to intermediate geared shaft 19 and via gear 22^{III} to output shaft 3. Jump stage 30, being no more connected to both stages is then not transmitting torque.

It is clear the above strategies may be used for upshifting or downshifting along the entire list of possible total ratios defined between input stage and output stage, i.e. twenty-six possible total ratios due to eight gear ratios multiplied for three range ratios plus two jump ratio. In particular the following order may be followed:
- I Total gear ratio: FIRST SLOW corresponding to gears 15^{IV} and 22^{I} engaged;
- II Total gear ratio: SECOND SLOW corresponding to gears 14^{IV} and 22^{I} engaged;
- III Total gear ratio: THIRD SLOW corresponding to gears 15^{III} and 22^{I} engaged;
- IV Total gear ratio: FOURTH SLOW corresponding to gears 14^{III} and 22^{I} engaged;
- V Total gear ratio: FIFTH SLOW corresponding to gears 15^{II} and 22^{I} engaged;
- VI Total gear ratio: SIXTH SLOW corresponding to gears 14^{II} and 22^{I} engaged
- VII Total gear ratio: SEVENTH SLOW corresponding to gears 15^{I} and 22^{I} engaged;
- VIII Total gear ratio: EIGHT SLOW corresponding to gears 14^{I} and 22^{I} engaged;
- IX Total gear ratio: FIRST JUMP corresponding to gear 33^{I} engaged;
- X Total gear ratio: FIRST MEDIUM corresponding to gears 15^{IV} and 22^{II} engaged;
- XI Total gear ratio: SECOND MEDIUM corresponding to gears 14^{IV} and 22^{II} engaged;
- XII Total gear ratio: THIRD MEDIUM corresponding to gears 15^{III} and 22^{II} engaged;
- XIII Total gear ratio: FOURTH MEDIUM corresponding to gears 14^{III} and 22^{II} engaged;
- XIV Total gear ratio: FIFTH MEDIUM corresponding to gears 15^{II} and 22^{II} engaged;
- XV Total gear ratio: SIXTH MEDIUM corresponding to gears 14^{II} and 22^{II} engaged
- XVI Total gear ratio: SEVENTH MEDIUM corresponding to gears 15^{I} and 22^{II} engaged;
- XVII Total gear ratio: EIGHT SLOW corresponding to gears 14^{I} and 22^{II} engaged;
- XVIII Total gear ratio: SECOND JUMP corresponding to gear 33^{II} engaged;
- XIX Total gear ratio: FIRST HIGH corresponding to gears 15^{IV} and 22^{III} engaged;
- XX Total gear ratio: SECOND HIGH corresponding to gears 14^{IV} and 22^{III} engaged;
- XXI Total gear ratio: THIRD HIGH corresponding to gears 15^{III} and 22^{III} engaged;
- XXII Total gear ratio: FOURTH HIGH corresponding to gears 14^{III} and 22^{III} engaged;
- XXIII Total gear ratio: FIFTH HIGH corresponding to gears 15^{II} and 22^{III} engaged;
- XXIV Total gear ratio: SIXTH HIGH corresponding to gears 14^{II} and 22^{III} engaged
- XXV Total gear ratio: SEVENTH HIGH corresponding to gears 15^{I} and 22^{III} engaged;
- XXVI Total gear ratio: EIGHT HIGH corresponding to gears 14^{I} and 22^{III} engaged;

A sixth example of operation is the possibility of providing a torque to the output shaft 3 directly from the all the electrical motors 18^{I} to 18^{IV}.

In specific operations, where a low power is requested to the output shaft 3, it is possible to provide a torque by modulating consequently the clutches of the transmission so that power of electrical motors 18^{I} to 18^{IV} can be sent to the output shaft 3, alone or in combination between them, while the output shaft 3 is not mechanically connected to the engine input shaft 2, e.g. because clutches 7, 8, 32 are open. The power addition is made possible by the electric control unit, that guarantees the in-phase addition of the mentioned electric torques. The total electric power can be sufficient to move the vehicle at low speed, for instance in the maneuver of the implement pickup or in creeping mode.

The invention also relates to a method for operating an electric hybrid architecture 1 as described above for shifting from a gear 15^{IV} of a gear ratio stage in combination with a gear 22^{I}, 22^{II}, 22^{III} of range gear stage 20 to a further gear 14^{I} of a gear ratio stage in combination with another gear 22^{I}, 22^{II}, 22^{III} of range gear stage:
- receiving an input for shifting from a gear 15^{IV} of a gear ratio stage in combination with a gear 22^{I}, 22^{II}, 22^{III} of range gear stage 20 to a further gear 14^{I} of a gear ratio stage in combination with another gear 22^{I}, 22^{II}, 22^{III} of range gear stage;
- rotating the jump shaft 31 by means of the corresponding electric motor 18^{IV} to reach a target velocity that minimize the speed difference at the two side of a dog clutch 17 suitable for selecting a gear 33^{I}, 33^{II} defining a ratio with the output shaft 3 which is comprised between the ratios between which it is needed to shift;
- when the target velocity is reached, engage the mentioned gear 33^{I}, 33^{II} while swapping clutches 7,8 with clutch 32 carried by the jump shaft 31;
- disengage said gear 15^{IV} of said gear ratio stage and said gear 22^{I}, 22^{II}, 22^{III} of range gear stage 20;
- make rotate the shaft 12 carrying the further gear 14^{I} of the gear ratio stage thanks to a coupled electric motor 18^{II} till reaching a predefined velocity ;
- make rotate intermediate shaft 19 carrying the another gear 22^{I}, 22^{II}, 22^{III} of the range gear stage 20 thanks to a coupled electric motor 18^{III} till reaching a predefined velocity;
- when the predefined velocities are reached, engage said another gear 22^{I}, 22^{II}, 22^{III} of the range gear stage 20 to the intermediate shaft 19 and the further gear 14^{I} of the gear ratio stage to shaft 12; and
- swapping clutches 7, 8 with clutch 32 carried by the jump shaft 31.

In view of the foregoing, the advantages of a dual clutch transmission 1 according to the invention and the related method are apparent.

Thanks to the presence of electrical motors 18^{I}, 18^{II}, 18^{III}, 18^{IV} it is possible to realize a full power shift under load condition in any possible total gear ratio, with the condition of a pre- synchronization of the new gear ratio with the speed of the shafts not involving with the torque transmission and to be coupled with the new gear ratio. In this way it is possible to use dog clutches 17 instead of synchronizers as selection elements.

Moreover, since electrical motors 18^{I}, 18^{II}, 18^{III}, 18^{IV} rotates almost freely for most of the time, their contribution to the parasitic losses is not relevant for the total efficiency of the transmission.

Since the shaft to be coupled is sped to a target velocity which is the engaging velocity of the selected gear, synchronizers are replaced by dog clutches. This allow to reduce costs and encumbrances of the hydraulic systems aimed to the control of synchronizers. Moreover, dog clutches may be simply controlled by ON-OFF valves, thereby avoiding the use of proportional valves whose control is more complex.

Moreover, electrical motors 18^{I}, 18^{II}, 18^{III}, 18^{IV} have two operational status, i.e. a motor phase in which they convert electrical energy into mechanical energy for making their shaft rotate at a constant speed or for making it accelerate, and a generator phase in which their shaft is decelerated or it's dragged by the rest of the transmission through an engaged clutch while the vehicle is driving and therefore they can convert mechanical energy into electrical energy. In the latter case, the energy recovered from mechanical to electrical may be stocked into an accumulator, such as a battery and/or a supercapacitor. Further, synchronization of the shafts is no more achieved by friction, thereby detriment to kinetic energy of the vehicle, i.e. by requiring more energy to combustion engine, but from the accumulator which can manage the load peak required by the specific motors.

The possible use of electrical motors 18^{I}, 18^{II}, 18^{III}, 18^{IV} to directly drive the output shaft 3, allows to eliminate a possible creeping stage, consequently increasing cost saving and reducing encumbrances of transmission 1 and improving the usability of the vehicle in certain conditions, e.g. in the maneuver of the implement pickup.

Further, thanks to the current layout and the presynchronization phases which occurs in time overlapping, a low shifting time (e.g. 0.15 seconds) between the above mentioned twenty-six total gear ratios can be obtained, compared to the inertia and the difference in speed, by using low power electric motors 18^{I} to 18^{IV}. Therefore performances of the transmission 1 are increased.

It is clear that modifications can be applied to the described electric hybrid architecture 1 for a DCT which do not extend beyond the scope of protection defined by the claims.

For example, the number of gears of gear ratio, range and jump stages may be varied according to vehicle necessity.

Further, the electric hybrid architecture for DCT may comprise different elements with respect to the described one, e.g. the number and/or typologies of clutches, gears and dog clutches may be varied.

For example the intermediate gear 9 may have the same gear ratio with respect to housings 10' and 10" or an additional stages may be present other than range selecting stage 20, the jump stage 30 and the output shaft 3.

Moreover, the control of dog clutches 17 may be implemented with any typology of control, e.g. a hydraulic, electric or pneumatic in alternative or in combinations.

## Claims

1. An electric hybrid dual clutch transmission (1) for an off road vehicle, said dual clutch transmission (1) comprising:
• an engine input shaft (2) configured to be coupled to the output of an engine of said work vehicle,
• an intermediate shaft (19) configured to be coupled to an output shaft (3) further connectable to a drive system of said off road vehicle, and
• a forward clutch (5) and a rearward clutch (6), each configured to be coupled to the engine input shaft (2);
• first and second shafts (11, 12) each configured to carry a plurality of gears (14, 15), said first and second shafts (11, 12) being configured to be coupled, via respective clutches (7, 8), to said input shaft (2) and being configured to be coupled to said shaft (19) defining with one of said gears (14, 15) a predetermined gear ratio (14^{I}, 14^{II}, 14^{III}, 14^{IV}, 15^{I}, 15^{II}, 15^{III}, 15^{IV}) between said engine input shaft (2) and said shaft (19),
• said intermediate shaft (19) being configured to carry a plurality of gears (22), said intermediate shaft (19) being coupled to said output shaft (3) by defining with one of said gears (22) a predetermined range ratio (22^{I}, 22^{II}, 22^{III}) between intermediate shaft (19) and output shaft (3),
• a jump stage (30) mechanically interposed between said input shaft (2) and said output shaft (3) and comprising a jump clutch (32) configured to be mechanically coupled to the engine input shaft (2) in order to mechanically by-pass said first, second and intermediate shafts (11, 12, 19) when said jump clutch (32) is engaged, said jump stage (30) further comprising at least a jump shaft (31;34) carrying a at least two gear wheels (33^{I}, 33^{II}) and configured to be coupled to said output shaft (3) by defining with one of said gears (33^{I}, 33^{II}) a plurality of predetermined jump ratios between input shaft (2) and output shaft (3),
said dual clutch transmission (1) comprising a plurality of electric motors (18^{I}, 18^{II}, 18^{III}, 18^{IV}) each of said plurality being connected to respectively said first shaft (11), to said second shaft (12), to said intermediate shaft (19) and to said jump shaft (31) to impart a torque.

2. Transmission according to claim 1, wherein said first and second shaft (11, 12) are configured to be coupled by said clutches (7, 8) to a pair of rotating housings (10', 10"), said rotating housing (10', 10") being configured to be coupled by another pair of clutches (5, 6) to said input shaft (2) and wherein said jump shaft (31, 34) is configured to be coupled by said jump clutch (32) to said input shaft (2) by said another pair of clutches (5, 6),
wherein said another pair of clutches (5,6), when alternatively coupled to the respective housing (10', 10") allows a reward or forward motion of the vehicle.

3. Transmission according to claim 1 or 2, wherein each of said first and second shafts (11, 12) carries four wheels (14^{I}, 14^{II}, 14^{III}, 14^{IV}; 15^{I}, 15^{II}, 15^{III}, 15^{IV}) and said intermediate shaft (19) carries three wheels (22^{I}, 22^{II}, 22^{III}).

4. Transmission according to any of claims 1 to 3, wherein said jump stage (30) comprises an intermediate jump shaft (34), said intermediate jump shaft (34) being mechanically coupled to said output shaft (3) and carrying a plurality gear wheels configured to cooperate with gear wheels (33^{I}, 33^{II}) carried by a main jump shaft (31) to define said jump ratios.

5. Transmission according to any of the preceding claims, wherein each of said gear wheels (14, 15, 22, 33) is carried in a rotatable free manner on the respective shaft (11, 12, 19, 34), said transmission (1) comprising a plurality of selection means (17) configured to rotatably couple said gear wheels (14, 15, 22, 33) to the respective shaft (11, 12, 19, 34).

6. Transmission according to claim 5, wherein said selection means (17) comprises a dog clutch or a joint clutch.

7. Transmission according to any of the preceding claims, wherein said electric motors (18^{I}, 18^{II}, 18^{III}, 18^{IV}) have a nominal working voltage around 48 Volt and/or an output power less than 5 kW.

8. Transmission according to any of the preceding claims, wherein said electric motors (18^{I}, 18^{II}, 18^{III}, 18^{IV}) being selectively operating on the respective shaft (11, 12; 19; 34).

9. Transmission according to any of the preceding claims, wherein said electric motors (18^{I}, 18^{II}, 18^{III}, 18^{IV}) are connectable to the respective shaft (11, 12; 19; 34) via a joint or a dog clutch.

10. Transmission according to any of the preceding claims, further comprising an electronic control unit configured to control said electric motors (18^{I}, 18^{II}, 18^{III}, 18^{IV}).

11. Transmission according to claim 10 wherein said electronic control unit is configured to control said selection means (17) in order to select a chosen gear wheel (14, 15, 22, 33).

12. Method for operating an electric hybrid transmission (1) according to any of the preceding claims for shifting from a gear (15^{IV}) of a gear ratio stage in combination a gear (22^{I}, 22^{II}, 22^{III}) of range gear stage (20) to a further gear (14^{I}) of a gear ratio stage in combination another gear (221, 22^{II}, 22^{III}) of range gear stage:
• receiving an input for shifting from a gear (15^{IV}) of a gear ratio stage in combination with a gear (22^{I}, 22^{II}, 22^{III}) of range gear stage (20) to a further gear (14^{I}) of a gear ratio stage in combination with another gear (22^{I}, 22^{II}, 22^{III}) of range gear stage;
• rotating said jump shaft (31) by means of the corresponding electric motor (18^{IV}) to reach a target velocity that minimize the speed difference at the two side of a dog clutch (17) suitable for selecting a gear (33^{I}, 33^{II}) defining a ratio witch said output shaft (3) which is comprised between the said ratios between which it is needed to shift;
• when the target velocity is reached, engage said gear (33^{I}, 33^{II}) while swapping clutches (7,8) with clutch (32) carried by said jump shaft (31);
• disengage said gear (15^{IV}) of said gear ratio stage and said gear (22^{I}, 22^{II}, 22^{III}) of range gear stage (20);
• make rotate the shaft (12) carrying said further gear (14^{I}) of said gear ratio stage thanks to a coupled electric motor (18^{II}) till reaching a predefined velocity ;
• make rotate intermediate shaft (19) carrying said another gear (22^{I}, 22^{II}, 22^{III}) of said range gear stage (20) thanks to a coupled electric motor (18^{III}) till reaching a predefined velocity ;
• when said predefined velocities are reached, engage said another gear (22^{I}, 22^{II}, 22^{III}) of said range gear stage (20) to said intermediate shaft (19) and said further gear (14^{I}) of said gear ratio stage to said shaft (12); and
• swapping clutches (7, 8) with clutch 32) carried by said jump shaft (31).

## Patentansprüche

1. Elektro-Hybrid-Doppelkupplungsgetriebe (1) für ein geländegängiges Fahrzeug, wobei das Doppelkupplungsgetriebe (1) aufweist:
eine Motor-Eingangswelle (2), die dazu eingerichtet ist, mit dem Ausgang eines Motors des Arbeitsfahrzeugs verbunden zu sein,
eine Zwischenwelle (19), die dazu eingerichtet ist, mit einer Ausgangswelle (3) verbunden zu sein, und die weiterhin mit einem Antriebssystem des geländegängigen Fahrzeugs verbindbar ist, und
eine Vorwärtskupplung (5) und eine Rückwärtskupplung (6), die jeweils dazu eingerichtet sind, mit der Motor-Eingangswelle (2) verbunden zu sein;
eine erste und eine zweite Welle (11, 12), die jeweils dazu eingerichtet sind, eine Mehrzahl von Zahnrädern (14, 15) zu tragen, wobei die erste und die zweite Welle (11, 12) dazu eingerichtet sind, über jeweilige Kupplungen (7, 8) mit der Eingangswelle (2) verbunden zu sein, und die dazu eingerichtet sind, mit der Welle (19) verbunden zu sein, und die mit einem der Zahnräder (14, 15) eine vorbestimmte Getriebeübersetzung (14^{I}, 14^{II}, 14^{III}, 14^{IV}, 15^{I}, 15^{II}, 15^{III}, 15^{IV}) zwischen der Motor-Eingangswelle (2) und der Zwischenwelle (19) definieren,
wobei die Zwischenwelle (19) dazu eingerichtet ist, eine Mehrzahl von Zahnrädern (22) zu tragen, wobei die Zwischenwelle (19) mit der Ausgangswelle (3) gekoppelt ist, wobei mit einem der Zahnräder (22) ein vorbestimmter Übersetzungsbereich (22^{I}, 22^{II}, 22^{III}) zwischen der Zwischenwelle (19) und der Ausgangswelle (3) definiert ist,
eine Überbrückungsstufe (30), die zwischen der Eingangswelle (2) und der Ausgangswelle (3) mechanisch angeordnet ist, und die eine Überbrückungskupplung (32) aufweist, die dazu eingerichtet ist, mit der Motor-Eingangswelle (2) mechanisch verbunden zu sein, um die erste Welle, die zweite Welle und die Zwischenwelle (11, 12, 19) mechanisch zu umgehen, wenn die Überbrückungskupplung (32) eingekuppelt ist, wobei die Überbrückungsstufe (30) weiterhin zumindest eine Überbrückungswelle (31; 34) aufweist, die mindestens zwei Zahnräder (33', 33") trägt und dazu eingerichtet ist, mit der Ausgangswelle (3) verbunden zu sein, wobei sie mit einem der Zahnräder (33', 33") eine Mehrzahl von vorbestimmten Überbrückungsübersetzungen zwischen der Eingangswelle (2) und der Ausgangswelle (3) definiert,
wobei das Doppelkupplungsgetriebe (1) eine Mehrzahl von Elektromotoren (18^{I}, 18^{II}, 18^{III}, 18^{IV}) aufweist, wobei jeder aus dieser Mehrzahl mit der ersten Welle (11), der zweiten Welle (12), der Zwischenwelle (19) bzw. der Überbrückungswelle (31) verbunden ist, um ein Drehmoment aufzubringen.

2. Getriebe nach Anspruch 1, wobei die erste und die zweite Welle (11, 12) derart eingerichtet sind, dass sie über die Kupplungen (7, 8) mit einem Paar von drehenden Gehäusen (10', 10") gekoppelt sind, wobei die drehenden Gehäuse (10', 10") derart eingerichtet sind, dass sie über ein weiteres Paar von Kupplungen (5, 6) mit der Eingangswelle (2) gekoppelt sind, und wobei die Überbrückungswelle (31, 34) derart eingerichtet ist, dass sie über die Überbrückungskupplung (32) mit der Eingangswelle (2) über das weitere Paar von Kupplungen (5, 6) gekoppelt ist,
wobei das weitere Paar von Kupplungen (5, 6), wenn es alternativ mit dem entsprechenden Gehäuse (10', 10") gekoppelt ist, eine Rückwärtsbewegung oder eine Vorwärtsbewegung des Fahrzeugs ermöglicht.

3. Getriebe nach Anspruch 1 oder 2, wobei jede aus der ersten und der zweiten Welle (11, 12) vier Räder (14^{I}, 14^{II}, 14^{III}, 14^{IV}; 15^{I}, 15^{II}, 15^{III}, 15^{IV}) trägt und die Zwischenwelle (19) drei Räder (22^{I}, 22^{II}, 22^{III}) trägt.

4. Getriebe nach einem der Ansprüche 1 bis 3, wobei die Überbrückungsstufe (30) eine zwischengeordnete Überbrückungswelle (34) aufweist, wobei die zwischengeordnete Überbrückungswelle (34) mit der Ausgangswelle (3) mechanisch gekoppelt ist und eine Mehrzahl von Zahnrädern trägt, die dazu eingerichtet sind, mit den Zahnrädern (33', 33"), die von einer HauptÜberbrückungswelle (31) getragen werden, zusammenzuwirken, um die Überbrückungsübersetzungen zu definieren.

5. Getriebe nach einem der vorhergehenden Ansprüche, wobei jedes der Zahnräder (14, 15, 22, 33) auf der jeweiligen Welle (11, 12, 19, 34) frei drehbar angeordnet ist, wobei das Getriebe (1) eine Mehrzahl von Auswahleinrichtungen (17) aufweist, die dazu eingerichtet sind, die Zahnräder (14, 15, 22, 33) mit der jeweiligen Welle (11, 12, 19, 34) rotatorisch zu koppeln.

6. Getriebe nach Anspruch 5, wobei die Auswahleinrichtung (17) eine Klauenkupplung oder eine Gelenkkupplung umfasst.

7. Getriebe nach einem der vorhergehenden Ansprüche, wobei die Elektromotoren (18^{I}, 18^{II}, 18^{III}, 18^{IV}) eine Nennspannung von etwa 48 Volt und/oder eine Ausgangsleistung von weniger als 5 kW haben.

8. Getriebe nach einem der vorhergehenden Ansprüche, wobei die Elektromotoren (18^{I}, 18", 18^{III}, 18^{IV}) an der jeweiligen Welle (11, 12; 19; 34) wahlweise betreibbar sind.

9. Getriebe nach einem der vorhergehenden Ansprüche, wobei die Elektromotoren (18^{I}, 18^{II}, 18^{III}, 18^{IV}) mit der jeweiligen Welle (11, 12; 19; 34) über eine Gelenk- oder Klauenkupplung verbindbar sind.

10. Getriebe nach einem der vorhergehenden Ansprüche, weiterhin aufweisend eine elektronische Steuereinheit, die dazu eingerichtet ist, die Elektromotoren (18^{I}, 18^{II}, 18^{III}, 18^{IV}) zu steuern.

11. Getriebe nach Anspruch 10, wobei die elektronische Steuereinheit dazu eingerichtet ist, die Auswahleinrichtungen (17) zu steuern, um ein bestimmtes Zahnrad (14, 15, 22, 23) auszuwählen.

12. Verfahren zum Betreiben eines Elektro-Hybrid-Doppelkupplungsgetriebes (1) nach einem der vorhergehenden Ansprüche zum Wechseln von einem Zahnrad (15^{IV}) einer Getriebeübersetzungsstufe in Kombination mit einem Zahnrad (22^{I}, 22^{II}, 22^{III}) eines Übersetzungsstufenbereichs (20) auf ein weiteres Zahnrad (14^{I}) einer Getriebeübersetzungsstufe in Kombination mit einem weiteren Zahnrad (22^{I}, 22^{II}, 22^{III}) des Übersetzungsstufenbereichs:
Erhalten einer Eingabe zum Wechseln von einem Zahnrad (15^{IV}) einer Getriebeübersetzungsstufe in Kombination mit einem Zahnrad (22^{I}, 22^{II}, 22^{III}) des Übersetzungsstufenbereichs (20) auf ein weiteres Zahnrad (14^{I}) einer Getriebeübersetzungsstufe in Kombination mit einem weiteren Zahnrad (22^{I}, 22^{II}, 22^{III}) des Übersetzungsstufenbereichs;
Drehen der Überbrückungswelle (31) mittels des entsprechenden Elektromotors (18^{IV}), um eine Soll-Geschwindigkeit zu erreichen, welche die Geschwindigkeitsdifferenz auf den beiden Seiten einer Klauenkupplung (17) minimiert, die geeignet ist, ein Zahnrad (33', 33") auszuwählen, das eine Übersetzung mit der Ausgangswelle (3) definiert, die sich zwischen den Übersetzungen befindet, zwischen denen gewechselt werden soll;
wenn die Soll-Geschwindigkeit erreicht ist, Eingreifen mit dem Zahnrad (33', 33"), während die Kupplungen (7, 8) mit der Kupplung (32) getauscht werden, die von der Überbrückungswelle (31) getragen wird;
Auskuppeln des Zahnrads (15^{IV}) der Getriebeübersetzungsstufe und des Zahnrads (22^{I}, 22^{II}, 22^{III}) des Übersetzungsstufenbereichs (20);
Drehen der Welle (12), die das weitere Zahnrad (14) der Getriebeübersetzungsstufe trägt mittels eines gekoppelten Elektromotors (18"), bis eine vorbestimmte Geschwindigkeit erreicht wird;
Drehen der zwischengeordneten Welle (19), die das weitere Zahnrad (22', 22", 22^{III}) des Übersetzungsstufenbereichs (20) trägt mittels eines gekoppelten Elektromotors (18^{III}), bis eine vorbestimmte Geschwindigkeit erreicht wird;
wenn die vorbestimmten Geschwindigkeiten erreicht sind, Eingreifen des weiteren Zahnrads (22^{I}, 22^{II}, 22^{III}) des Übersetzungsstufenbereichs (20) in die Zwischenwelle (19) und des weiteren Zahnrads (14^{I}) der Getriebeübersetzungsstufe in die Welle (12); und
Tauschen der Kupplungen (7, 8) mit der Kupplung (32), die von der Überbrückungswelle (31) getragen wird.

## Revendications

1. Transmission à double embrayage hybride électrique (1) pour un véhicule tout terrain, ladite transmission à double embrayage (1) comprenant :
• un arbre d'entrée moteur (2) configuré pour être accouplé à la sortie d'un moteur dudit véhicule de travail,
• un arbre intermédiaire (19) configuré pour être accouplé à un arbre de sortie (3) pouvant être relié en outre à un système d'entraînement dudit véhicule tout terrain, et
• un embrayage avant (5) et un embrayage arrière (6), chacun configuré pour être accouplé à l'arbre d'entrée moteur (2) ;
• un premier et un second arbres (11, 12) étant chacun configuré pour porter une pluralité d'engrenages (14, 15), lesdits premier et second arbres (11, 12) étant configurés pour être accouplés, via des embrayages respectifs (7, 8), audit arbre d'entrée (2) et étant configurés pour être accouplés audit arbre (19) définissant avec l'un desdits engrenages (14, 15) un rapport d'engrenage prédéterminé (14^{I}, 14^{II}, 14^{III}, 14^{IV}, 15^{I}, 15^{II}, 15^{III}, 15^{IV}) entre ledit arbre d'entrée moteur (2) et ledit arbre (19),
• ledit arbre intermédiaire (19) étant configuré pour porter une pluralité d'engrenages (22), ledit arbre intermédiaire (19) étant accouplé audit arbre de sortie (3) en définissant avec l'un desdits engrenages (22) un rapport d'engrenage prédéterminé (22^{I}, 22^{II}, 22^{III}) entre l'arbre intermédiaire (19) et l'arbre de sortie (3),
• une phase de saut (30) mécaniquement interposée entre ledit arbre d'entrée (2) et ledit arbre de sortie (3) et comprenant un embrayage de saut (32) configuré pour être mécaniquement accouplé à l'arbre d'entrée moteur (2) afin de contourner mécaniquement lesdits premier et second arbres et l'arbre intermédiaire (11, 12, 19) lorsque ledit embrayage de saut (32) est engagé, ladite phase de saut (30) comprenant en outre au moins un arbre de saut (31, 34) portant au moins deux roues dentées (33^{I}, 33^{II}) et étant configurée pour être accouplée audit arbre de sortie (3) en définissant avec l'un desdits engrenages (33^{I}, 33^{II}) une pluralité de rapports de saut prédéterminés entre l'arbre d'entrée (2) et l'arbre de sortie (3),
ladite transmission à double embrayage (1) comprenant une pluralité de moteurs électriques (18^{I}, 18^{II}, 18^{III}, 18^{IV}) chacune de ladite pluralité étant reliée respectivement audit premier arbre (11), audit second arbre (12), audit arbre intermédiaire (19) et audit arbre de saut (31) pour transmettre un couple.

2. Transmission selon la revendication 1, dans laquelle lesdits premier et second arbres (11, 12) sont configurés pour être accouplés par lesdits embrayages (7, 8) à une paire de boîtiers rotatifs (10', 10"), lesdits boîtiers rotatifs (10', 10") étant configurés pour être accouplés par une autre paire d'embrayages (5, 6) audit arbre d'entrée (2) et dans laquelle ledit arbre de saut (31, 34) est configuré pour être accouplé par ledit embrayage de saut (32) audit arbre d'entrée (2) par ladite autre paire d'embrayages (5, 6),
dans laquelle ladite autre paire d'embrayages (5, 6), lorsqu'elle est alternativement accouplée au boîtier respectif (10', 10") permet un déplacement arrière ou avant du véhicule.

3. Transmission selon la revendication 1 ou 2, dans laquelle chacun desdits premier et second arbres (11, 12) porte quatre roues (14^{I}, 14^{II}, 14^{III}, 14^{IV}, 15^{I}, 15^{II}, 15^{III}, 15^{IV}) et ledit arbre intermédiaire (19) porte trois roues (22^{I}, 22^{II}, 22^{III}).

4. Transmission selon l'une quelconque des revendications 1 à 3, dans laquelle la phase de saut (30) comprend un arbre de saut intermédiaire (34), ledit arbre de saut intermédiaire (34) étant mécaniquement accouplé audit arbre de sortie (3) et portant une pluralité de roues dentées configurée pour coopérer avec les roues dentées (33^{I}, 33^{II}) portées par un arbre de saut principal (31) pour définir lesdits rapports de saut.

5. Transmission selon l'une quelconque des revendications précédentes, dans laquelle chacune desdites roues dentées (14, 15, 22, 33) est portée sans rotation sur l'arbre respectif (11, 12, 19, 34), ladite transmission (1) comprenant une pluralité de moyens de sélection (17) configurés pour accoupler de manière rotative lesdites roues dentées (14, 15, 22, 33) à l'arbre respectif (11, 12, 19, 34).

6. Transmission selon la revendication 5, dans laquelle lesdits moyens de sélection (17) comprennent un embrayage à griffes ou un embrayage articulé.

7. Transmission selon l'une quelconque des revendications précédentes, dans laquelle lesdits moteurs électriques (18^{I}, 18^{II}, 18^{III}, 18^{IV}) ont une tension de service nominale aux alentours de 48 volts et/ou une puissance de sortie inférieure à 5 kW.

8. Transmission selon l'une quelconque des revendications précédentes, dans laquelle lesdits moteurs électriques (18^{I}, 18¹¹, 18^{III}, 18^{IV}) fonctionnent sélectivement sur l'arbre respectif (11, 12 ; 19 ; 34).

9. Transmission selon l'une quelconque des revendications précédentes, dans laquelle lesdits moteurs électriques (18^{I}, 18¹¹, 18^{III}, 18^{IV}) peuvent être reliés à l'arbre respectif (11, 12 ; 19 ; 34) via un embrayage articulé ou à griffes.

10. Transmission selon l'une quelconque des revendications précédentes, comprenant en outre une unité de commande électronique configurée pour commander lesdits moteurs électriques (18^{I}, 18¹¹, 18^{III}, 18^{IV}).

11. Transmission selon la revendication 10, dans laquelle ladite unité de commande électronique est configurée pour commander lesdits moyens de sélection (17) afin de sélectionner une roue dentée choisie (14, 15, 22, 23).

12. Procédé pour faire fonctionner une transmission hybride électrique (1) selon l'une quelconque des revendications précédentes pour passer d'un engrenage (15^{IV}) d'un étage d'engrenage en combinaison avec un engrenage (22^{I}, 22^{II}, 22^{III}) d'une gamme d'étages d'engrenage (20) à un autre engrenage (14^{I}) d'un étage d'engrenage en combinaison avec un autre engrenage (22^{I}, 22^{II}, 22^{III}) d'une gamme d'étages d'engrenage :
• recevoir une entrée pour passer d'un engrenage (15^{IV}) d'un étage d'engrenage en combinaison avec un engrenage (22^{I}, 22^{II}, 22^{III}) d'une gamme d'étages d'engrenage (20) à un autre engrenage (14^{I}) d'un étage d'engrenage en combinaison avec un autre engrenage (22^{I}, 22^{II}, 22^{III}) de la gamme d'étages d'engrenage ;
• faire tourner ledit arbre de saut (31) par des moyens du moteur électrique correspondant (18^{IV}) pour atteindre une vitesse cible qui minimise la différence de vitesse aux deux côtés d'un embrayage à griffes (17) convenant à la sélection d'un engrenage (33^{I}, 33^{II}) définissant un rapport avec ledit arbre de sortie (3) qui est compris entre lesdits rapports entre lesquels il est nécessaire de changer de vitesse
• lorsque la vitesse cible est atteinte, engager ledit engrenage (33^{I}, 33^{II}) tout en permutant les embrayages (7, 8) avec l'embrayage (32) porté par ledit arbre de saut (31) ;
• désengager ledit engrenage (15¹V) dudit étage d'engrenage et ledit engrenage (22^{I}, 22^{II}, 22^{III}) de la gamme d'étages d'engrenage (20) ;
• faire tourner l'arbre (12) portant un autre engrenage (14^{I}) dudit étage d'engrenage grâce à un moteur électrique couplé (18^{II}) jusqu'à atteindre une vitesse prédéfinie ;
• faire tourner l'arbre intermédiaire (19) portant ledit autre engrenage (22^{I}, 22^{II}, 22^{III}) de ladite gamme d'étages d'engrenage (20) grâce à un moteur électrique couplé (18^{III}) jusqu'à atteindre une vitesse prédéfinie ;
• lorsque lesdites vitesses prédéfinies sont atteintes, engager ledit autre engrenage (22^{I}, 22^{II}, 22^{III}) de ladite gamme d'étages d'engrenage (20) sur ledit arbre intermédiaire (19) et ledit autre engrenage (14^{I}) dudit étage d'engrenage sur ledit arbre (12) ; et
• permuter les embrayages (7, 8) avec l'embrayage (32) porté par ledit arbre de saut (31).
